(19) Europäisches Patentamt

European Patent Office

Office européen des brevets

(11) EP 1 256 941 B1

(12) EUROPEAN PATENT SPECIFICATION

(45) Date of publication and mention
of the grant of the patent:
**09.06.2004 Bulletin 2004/24**

(51) Int Cl.⁷: $G11B\ 7/135$, $G11B\ 7/125$

(21) Application number: **02077195.2**

(22) Date of filing: **13.02.1998**

(54) **Optical pickup having an objective lens compatible with a plurality of optical disk formats**

Optischer Aufnahmekopf mit einer Objektivlinse kompatibel mit einer Vielzahl von Formaten optischer Platten

Tête optique avec une lentille d'objectif compatible avec une pluralité de disques optiques

(84) Designated Contracting States:
**DE GB NL**

(30) Priority: **13.02.1997 KR 9704273**

(43) Date of publication of application:
**13.11.2002 Bulletin 2002/46**

(62) Document number(s) of the earlier application(s) in accordance with Art. 76 EPC:
**98301050.5 / 0 859 356**

(73) Proprietor: **SAMSUNG ELECTRONICS CO., LTD.**
**Suwon-City, Kyungki-do (KR)**

(72) Inventors:
  • **Yoo, Jang-Hoon**
    **Youngdungpo-gu, Seoul (KR)**
  • **Chung, Chong-Sam**
    **Sungnam-city, Kyungki-do (KR)**
  • **Lee, Chul-Woo**
    **Yongsan-gu, Seoul (KR)**
  • **Cho, Kun-Ho**
    **Suwon-city, Kyungki-do (KR)**

(74) Representative: **Chugg, David John et al**
    **Appleyard Lees,**
    **15 Clare Road**
    **Halifax, West Yorkshire HX1 2HY (GB)**

(56) References cited:
    **EP-A- 0 731 458**     **EP-A- 0 838 812**

  • **PATENT ABSTRACTS OF JAPAN vol. 096, no. 003, 29 March 1996 (1996-03-29) & JP 07 302437 A (TOSHIBA CORP), 14 November 1995 (1995-11-14)**

## EP 1 256 941 B1

**Description**

The present invention relates to an optical pickup including an objective lens having a function of forming an optical spot on an information recording surface of optical recording media of different formats, and more particularly, to an optical pickup having an objective lens which is compatibly used in a plurality of optical disks each having a different format, such as a digital versatile disk (DVD), a CD-Recordable (CD-R), CD-Rewritable (CD-RW), a Compact Disc (CD) and a Laser Disk (LD).

A recording medium for recording and reproducing information such as video, audio or data at high density, is a disk, a card or a tape. However, a disk-type recording medium is primarily used. Recently, an optical disk system has been developed in the form of an LD, a CD and a DVD. However, when optical disks having respectively different format, such as DVD, CD-R, CD, CD-RW and LD are compatibly used, optical aberration occurs due to the variation of disk thickness and wavelength. Thus, an optical pickup which is compatible with the different formats of the disks as well as removes the above-mentioned optical aberration has been actively studied. In the result of such a study, optical pickups which are compatible with the different formats have been fabricated.

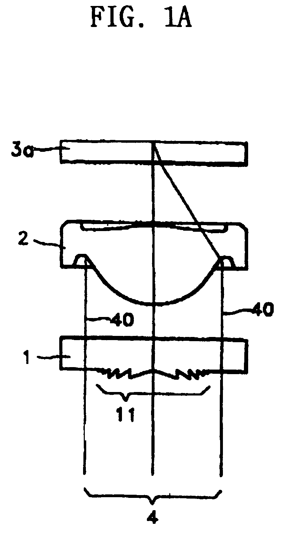

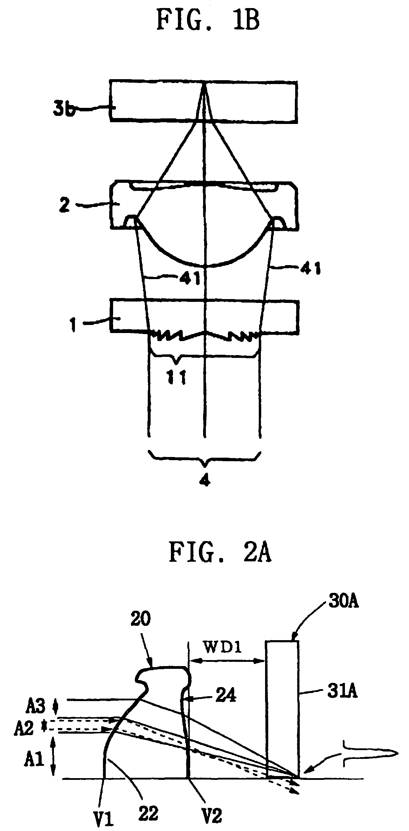

Figures 1A and 1B show a part of a conventional optical pickup which is compatible with different formats. Figure 1A shows a case where light is focused on a thin optical disk and Figure 1B is a case where light is focused on a thick optical disk. In Figures 1A and 1B, a reference numeral 1 denotes a hologram lens, 2 denotes a refractive objective lens, 3a denotes a thin optical disk, and 3b denotes a thick optical disk. Light 4 output from an unshown light source is diffracted by a grating (lattice) pattern 11 of the hologram lens 1, to accordingly generate non-diffracted zero-order light 40 and diffracted first-order light 41, respectively. The non-diffracted zero-order light 40 is focused on an information recording surface of an optical disk 3a by the objective lens 2. The diffracted first-order light 41 is focused on an information recording surface of an optical disk 3b by the objective lens 2. Therefore, the optical pickup shown in Figures 1A and 1B uses the non-diffracted zero-order light 40 and the diffracted first-order light 41 to record information on or read the information from the optical disks 3a and 3b of different thicknesses, respectively.

Another conventional technology is disclosed in Japanese Patent Laid-open Publication No. Heisei 7-302437, published on November 14, 1995. An objective lens of an optical head apparatus disclosed in the above publication has, from the centre of the objective lens an odd-numbered region(s) having a focal point congruent with an information recording surface of a thin optical disk, and an even-numbered region(s) having a focal point congruent with an information recording surface of a thick optical disk. Thus, in the case of the thin optical disk, light transmitted through the odd-numbered region(s) of the objective lens is used to read information from the thin optical disk. Also, in the case of the thick optical disk, light transmitted through the even-numbered region(s) of the objective lens is used to read information from the thick optical disk.

However, since the optical pickup shown in Figures 1A and 1B divides the incident light into zero order light and first order light, the efficiency of a light use is lowered. That is, since the incident light is divided into zero order light and first order light by the hologram lens 1, only the zero-order light or the first-order light is used to record the information on or read the information from the optical disk, and the optical pickup uses only 15% or so of the incident light, to thereby lower the light use efficiency. Also, according to the thickness of the used optical disk, only one of the zero-order light and the first-order light reflected from the corresponding optical disk 3a or 3b contains actually read information. Thus, the light having no information functions as noise in a light detection operation with respect to the light containing information. The above problem can be overcome by processing the hologram lens 1 of the lens device. However, when working the hologram lens 1, an etching process for producing a fine hologram pattern requires a high precision. Thus, the manufacturing cost increases.

In the case of the prior art disclosed in Japanese Patent Laid-open Publication No. Heisei 7-302437, the light transmitted through only one of the odd-numbered region(s) and the even-numbered region(s) is used. As a result, the light use efficiency is lowered. Also, since the number of the focal points is always two, the light having no information functions as noise during the light detection, which makes it difficult to detect information from the light reflected from the optical disk.

The above-mentioned Japanese patent laid-open publication number heisei 7-302473 forms the precharacterising portion of the independent claims appended hereto.

EP-A-0,838,812, which is prior art only under Article 54(3) EPC, discloses an optical pickup with an objective lens having first, second and third divided surfaces arranged concentrically from an optical axis arranged such that a beam spot passing through the first and third divided surfaces is formed onto a first optical recording medium of a first thickness t1, and a beam spot passing through the first and second surfaces is formed onto a second optical medium having a thickness t2 which is more than t1.

With a view to solve or reduce the above problem it is an aim of preferred embodiments of the present invention to provide an optical pickup which has an excellent signal detection function independent of a disk format thereof.

It is another aim to provide an objective lens which compatibly is used with at least two substrates having respectively different thicknesses.

2

Additional aims and advantages of the invention will be set forth in part in the description which follows and, in part, will be obvious from the description, or may be learned by practice of the invention.

According to the present invention there is provided an optical pickup device and an objective lens as set forth in the appended claims 1 and 16, respectively. Preferred features of the invention will be apparent from the dependent claims, and the description which follows.

The numerical aperture of the inner area preferably maintains a value of 0.3 at a minimum.

The annular lens area of said objective lens may have a numerical aperture such that the inner area and the annular lens area form the single light spot on the information recording surface of the second optical recording medium during reproduction of information from the second optical medium.

The inner area, the annular lens area and the outer area may be formed on a lens surface of the objective lens facing the light source side of the objective lens.

Preferably, an imaginary surface extending the aspherical surface of the annular lens area is spaced apart from the vertex on the aspherical surface of the inner area.

Preferably, a width of the annular lens area ranges between about 100 and about 300μm.

Preferably, a surface area of the annular lens area is at least 10% of an incident surface of said objective lens of the light from the light source.

The first optical recording medium is preferably a digital versatile disk (DVD) and the second optical recording medium is one of a compact disk (CD) and a laser disk (LD), when said light source emits the light having a wavelength which is adapted for the digital versatile disk (DVD).

The pickup may further comprise at least one additional light source, wherein said first optical recording medium is a digital versatile disk (DVD) and said second optical recording medium is one of a compact disk (CD), a compact disk recordable (CD-R), CD-Rewritable (CD-RW) and a laser disk (LD), when a first one of the light sources emitting the light has a wavelength which is adapted for the digital versatile disk (DVD) and a second one of the light sources has a wavelength which is adapted for the compact disk recordable (CD-R) are used.

Preferably, the light detector is a single detector used to detect the light from said first and second optical recording media as optical information, when at least two of the plurality of light sources are used and said first and second optical recording media are compatibly reproduced.

The height of said step difference may be about 1.0-1.5μm.

Preferably, a surface of the annular lens area protrudes from surfaces of the inner and outer areas.

Alternatively, a surface of the annular lens area may be cut out from the surfaces of the inner and outer areas.

For a better understanding of the invention, and to show how embodiments of the same may be carried into effect, reference will now be made, by way of example, to the accompanying diagrammatic drawings, in which:

Figures 1A and 1B show a conventional optical pickup having a hologram lens and a refractive objective lens;

Figure 2A shows that an objective lens according to first and second embodiments of the present invention forms an optical spot on an information recording surface of a thin optical disk;

Figure 2B shows that the objective lens according to the first and second embodiments of the present invention forms an optical spot on an information recording surface of a thick optical disk;

Figure 2C shows an objective lens according to the first and second embodiments of the present invention as viewed from a light source, which shows sections of an inner area, an annular lens area and an outer area of the objective lens;

Figure 2D shows an enlarged annular lens area portion of an ideal annular lens of the present invention;

Figure 3A shows longitudinal spherical aberration of the objective lens according to the first embodiment of the present invention during readout of a thick optical medium;

Figure 3B shows wavefront aberration of the objective lens according to the first embodiment of the present invention during readout of a thick optical medium;

Figure 4 shows an objective lens according to the first embodiment of the present invention;

Figure 5 shows an enlarged annular lens portion of the objective lens according to the second embodiment of the present invention;

Figure 6 shows a first type optical system of an optical pickup having a single light source adopting an objective lens according the first and second embodiments of the present invention;

Figure 7 shows a modification of the optical system of the optical pickup shown in Figure 6;

Figure 8A shows a second type of optical pickup having an objective lens, two light sources and a single light detector according to the first and second embodiments of the present invention;

Figure 8B shows a modification of the optical pickup shown in Figure 8A;

Figure 9 shows a third type of optical pickup having an objective lens, two light sources and two light detectors according to the first and second embodiments of the present invention;

Figure 10 shows distribution of the light beams in the light detector when a thin optical disk is read by using the optical pickup according to the first and second embodiments of the present invention; and

Figure 11 shows distribution of the light beams in the light detector when a thick optical disk is read by using the objective lens according to the first and second embodiments of the present invention.

Reference will now be made in detail to the present preferred embodiments of the present invention, examples of which are illustrated in the accompanying drawings, wherein like reference numerals refer to the like elements throughout. The embodiments are described below in order to explain the present invention by referring to the Figures.

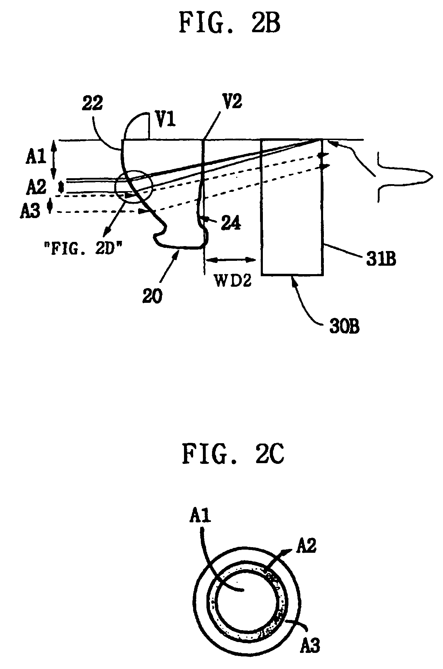

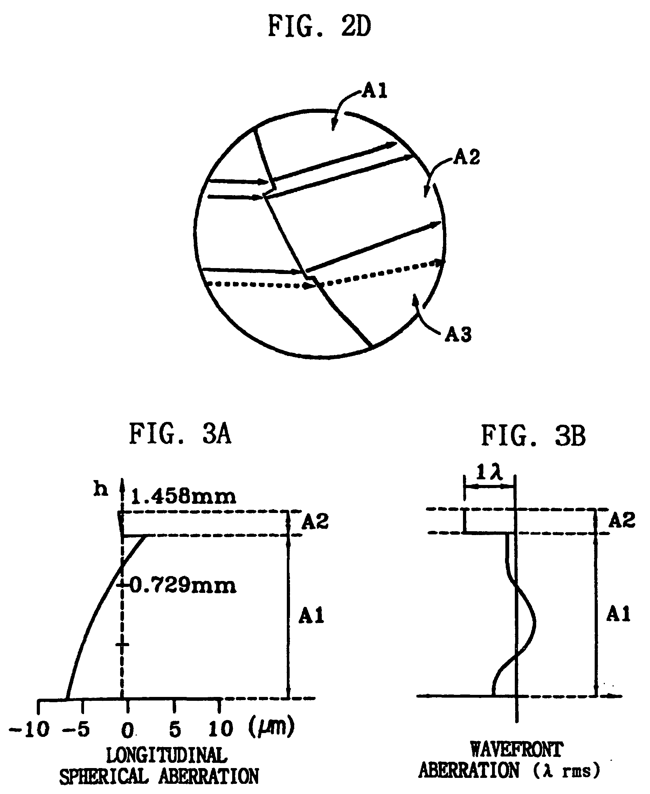

Figures 2A through 2D show an objective lens according to the present invention. Figure 2A shows optical paths when a working distance of the objective lens 20 is "WD1" during readout of a thin optical disk 30A. Figure 2B shows optical paths when a working distance of the objective lens 20 is "WD2" during readout of a thick optical disk 30B. Figure 2C shows an objective lens 20 viewed from a light source, which shows that a lens surface 22 lying in the light source side of the objective lens 20 is divided into an inner area (central region) A1, an annular lens area (intermediate region) A2 and an outer area (periphery region) A3. Figure 2D is an enlarged view of the portion of the annular lens area A2 of the objective lens 20, where the objective lens 20 is ideally manufactured.
In the objective lens 20 according to the first embodiment of the present invention, the lens surface 22 which lies in the light source side of the objective lens 20 is divided into the inner area A1, the annular lens area A2 and the outer area A3, by the annular lens area A2 having a ring form such as an elliptical or circular shape with a vertex V1 of the lens surface 22 in the center. Here, the vertex V1 is a point where the axis of the objective lens 20 intersects the lens surface 22 of the light source side. The inner area A1 and the outer area A3 have aspherical surface shapes which are optimized to form a best focal point on the information recording surface 31A of the thin optical disk 30A. Also, the inner area A1 is fabricated to generate a little spherical aberration on the information recording surface 31B of the thick optical disk 30B, but to have a sufficiently small spherical aberration for readout of the thick optical disk 30B. Particularly, the inner area A1 has a numerical aperture NA meeting the following relationship 1 to provide an optimized optical spot for reproducing the thick optical disk 30B such as an existing CD. The inner area A1, annular lens area A2, and outer area A3 respectively correspond to a near axis region, an intermediate axis region and a far axis region of incident light.
When light of 650nm wavelength is used, it is preferable that the numerical aperture NA of the objective lens 20 is 0.37 or more to reproduce the existing CD.

$$0.8\lambda/NA \sim spot\ size \tag{1}$$

Here, $\lambda$ represents the wavelength of the light, and NA represents the numerical aperture of the inner area A1. Assuming that a working distance of the objective lens 20 is "WD1" where the best focal point is formed by the inner area A1 and the outer area A3, the light (rays) transmitted through the inner area A1 and the outer A3 form the optimal spot on the information recording surface 31A of the thin optical disk 30A with respect to the working distance "WD1" and do not generate spherical aberration. Also, when the light transmitted through the inner area A1 of the objective lens 20 is used, the existing optical disk 30B such as a relatively thick CD is reproduced. This technology has been disclosed in Korean patent application No. 96-3605. However, a numerical aperture not less than 0.4 is required to reproduce an optical disk which uses a smaller sized spot such as an LD among the existing optical disks. To make large NA above 0.37, when the annular lens area A2 has an aspherical surface extending the aspherical surface shape of the inner area A1, the light transmitted through the annular lens area A2 during reproduction of the LD generates a larger optical aberration to such a degree that the LD cannot be reproduced. Therefore, the annular lens area A2 corrects such optical aberration, and has an aspherical surface shape by which the light transmitted through the annular lens area A2 corrects the optical aberration at a best position where a focal point is formed by the inner area A1.

Figure 2B shows an optical path during reproduction of the thick optical disk 30B, and shows that the light transmitted through the outer area A3 does not form a spot on the optical disk and is scattered and the light transmitted through the areas A1 and A2 are focused on the thick disk surface 31B. Meanwhile, when the working distance of the objective lens 20 is "WD2", the light transmitted through the annular lens area A2 is scattered at the information recording surface 31A of the optical disk 30A. The solid lines in Figure 2A show the optical paths of the light transmitted through the inner area A1 and the outer area A3 when the working distance is "WD1". The dotted line shows the optical path of the light transmitted through the annular lens area A2 in which the light is scattered.

Figure 3A is a graph showing aberration for explaining a working distance and optical longitudinal spherical aberration of the objective lens 20 during readout of a thick optical disk 30B. Since the inner area A1 has spherical aberration when the objective lens 20 reproduces the thick optical disk 30B, the objective lens 20 is optically defocused, that is, the working distance is adjusted, to thereby have a minimal value of the optical aberration. A spherical aberration coefficient $W_{40}$ produced due to the difference of a disk thickness between the thin optical disk 30A and the thick optical disk 30B meets the following equation 2.

$$W_{40} = \frac{n^2-1}{8n_3} d(NA)^4 \approx 0.6\mu.6\mu m \qquad (2)$$

Generally, the optical aberration including spherical aberration is expressed as the following equation (3).

$$W = W_{20}h^2 + W_{40}h^4 \qquad (3)$$

Here, $W_{20}$ is a defocus coefficient and h is a marginal (light) ray height.

The square root of the optical aberration meets the following equation 4.

$$\sigma^2 w = \sqrt{(\overline{W^2} - (\overline{W})^2)} = \frac{1}{12}[W_{20} + W_{40}]^2 + \frac{1}{180}W_{40}^2$$

$$Here, \ \overline{W^2} = \frac{1}{3}W_{20}^2 + \frac{1}{2}W_{20}W_{40} + \frac{1}{5}W_{40}^2,$$

$$\overline{W} = \frac{1}{2}W_{20} + \frac{1}{3}W_{40}$$

Therefore, the condition of the defocus coefficient which minimizes the optical aberration is $W_{20}=-W_{40}$, and the actual defocus amount complies with the following equation (5).

$$\Delta Z = - \frac{2W_{40}}{(NA)^2} \approx -8.3\mu m \qquad (5)$$

Here, the variation of the numerical aperture (NA) of the inner area, the disk refractive index (n) and the disk thickness (d) are as follows: NA=0.38, n=1.58 and d=0.6mm. If the annular lens area A2 is designed so that a best spot is formed and spherical aberration does not occur with respect to the thick optical disk 30B being defocussed by 8.3μm, the longitudinal spherical aberration graph as shown in Figure 3A can be obtained. In this case, the difference between a focal length formed by the inner area A1 and a focal length formed by the annular lens area A2 becomes 8.3μm owing to the defocus amount of 8.3μm at the optical axis. And the focal length is 3.3025mm for the inner area A1 and 3.3111mm for the annular lens area A2 according to the calculation by a commercial program (s/w) for optics. The 8.3μm is a result from a third order calculation by hand, but 8.6μm is a result from a high order calculation including the third order by using the optical (s/w) program.

If the working distance of the objective lens 20 is changed from "WD1" to "WD2" which makes the optical aberration by the light transmitted through the annular lens area A2 into substantially zero, the light transmitted through the annular lens area A2 forms the optical path shown as the solid lines in Figure 2B, and forms the optimal spot on the information recording surface 31B of the thick optical disk 30B. When the working distance "WD2" is the optimal working distance for reproduction of the thick optical disk 30B, the annular lens area A2 increases efficiency of utilization of the light used and increases the numerical aperture as well. In this case, the inner area A1 maintains spherical aberration which is sufficiently small for reproduction of the thick optical disk 30B. The spherical aberration generated by the inner area A1 is minimized and total wavefront aberration is about 0.07λrms. Thus, the light transmitted through the inner area A1 and the annular lens area A2 forms a spot having a reduced size of 15% or more without increasing the optical aberration on the information recording surface 31B of the thick optical disk 30B, as compared with a case when the annular lens area A2 has the same aspherical surface shape as that of the inner area A1. Thus, it is possible to reproduce an optical recording medium such as an existing LD requiring a high density, as well as a CD. In this case, the light transmitted through the outer area A3 is scattered and does not influence the optical spot formed on the information recording surface 31B of the thick optical disk 30B. The optical path of the light transmitted through the outer area A3 is shown as the dotted lines in Figure 2B. Thus, a single optical spot can be formed on the information recording surface 31B. Examples of the working distances described above and shown in Figures 2A and 2B are WD1=1.897mm and WD2=1.525mm.

When the recorded information is read, the thin optical disk 30A uses the light of the relatively short wavelength, while the thick optical disk 30B uses both the light of the short wavelength and the relatively long wavelength. Therefore, when the thin optical disk 30A is a DVD and the thick optical disk 30B is a CD, an LD, CD-RW or a CD-R, the inner area A1 and the outer area A3 have the aspherical surface shapes optimized to the information recording surface of the DVD, and the inner area A1 and the annular lens area A2 have the aspherical surface shapes where aberration is corrected and the working distance is optimized so that the information can be reproduced with respect to the information recording surface of the CD, the LD or CD-RW or the CD-R. The annular lens area A2 among the areas A1, A2 and A3 has an aspherical surface shape determined by the following equation (6) expressing the aspherical surface.

$$Z(h) = \frac{h^2/R}{1 + \sqrt{(1-(1+K)h^2/R^2)}} + Ah^4 + Bh^6 + Ch^8 + Dh^{10} + Z_{offset} \qquad (6)$$

In the above equation (6), a function "Z" is a distance from the surface perpendicular to the optical axis and passing through the vertex V1 of the objective lens 20 to the lens surface 22 lying on the light source side of the objective lens 20. A variable "h" is a distance from the axis of the objective lens 20 to a particular point perpendicular to the axis. A constant "R" is a curvature which becomes a reference to determine an aspherical surface shape. $Z_{offset}$ is a parameter which is newly introduced to express a step difference between the annular lens area A2 and the inner area A1. Since the equation (6) is well known to a person who has an ordinary skill in the art, a detailed description thereof will be omitted. The annular lens area A2 has a protruded shape or a recessed shape when compared with the inner area A1 and the outer area A3. The annular lens area A2 of the protruded shape is enlarged and shown in Figure 2D. The aspherical surface shapes possessed by the inner area A1 and the outer area A3 can be expressed by removing the offset component $Z_{offset}$ in the equation (6). The width of the annular lens area A2 is determined to provide the spot optimized for reproducing the relatively thick optical disk, and occupies at least 10% of an incident surface 22 of the objective lens 20 to which the light is incident from the light source. In case of a quantitative expression, the width of the annular lens area A2 has a range between about 100 and 300μm.

The data obtained to provide the optimal aspherical surface shapes to the area A1, A2 and A3 is represented in the following table.

Table

| LENS SURFACE | CURVATURE | ASPHERICAL SURFACE COEFFICIENT | THICKNESS | REFRACTIVE INDEX |
|---|---|---|---|---|
| INNER AREA (A1)/ OUTER AREA (A3) | 2.13482 | K: -0.425667<br>A: -0.822095E-03<br>B: -0.249645E-03<br>C: -0.106803E-03<br>D: -0.194864E-03<br>$Z_{offset}$: 0.0 | 1.795 | 1.5864 |
| ANNULAR LENS AREA (A2) | 2.14101 | K: -0.425667<br>A: -0.362745E-03<br>B: -0.259541E-03<br>C: -0.665620E-03<br>D: -0.620804E-03<br>$Z_{offset}$: -0.0012 | 1.795 | 1.5864 |
| LENS SURFACE (24) TOWARD OPTICAL DISK | -14.39337 | K: 8.578602<br>A: 0.897734E-02<br>B: -0.341346E-02<br>C: -0.762226E-03<br>D: -0.665163E-04 | | |
| OPTICAL DISK | 0 | | 1.2/0.6 | 1.58 |

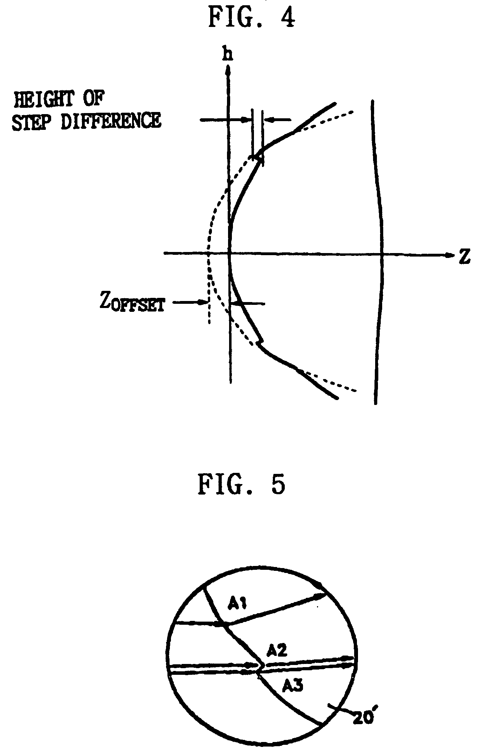

When the aspherical surface shapes of the areas A1, A2 and A3 are determined by the equation (6) and the above Table, the imaginary surface which extends from the aspherical surface of the annular lens area A2 expressed as the dotted line in Figure 4 becomes farther than the aspherical surface of the inner area A1 from the vertex V1 of the objective lens 20.

However, to easily form the areas A1, A2 and A3 of the aspherical surface shapes on the lens surface lying on the light source side, it is preferable that the annular lens area A2 is worked after working the inner area A1 and the outer area A3 primarily. Thus, the ring-shaped annular lens area A2 has a step difference at a region of contact with the inner area A1 contacts or the outer area A3.

Figure 4 shows an objective lens 20 which is worked so that a step difference exists in a region where the inner area A1 contacts the annular lens area A2. Figure 5 shows an objective lens 20' which is worked so that a step difference exists in a region where the annular lens area A2 contacts the outer area A3. Such step differences generate aberration due to a light path difference between the light passing through the inner area A1 and the annular lens area A2. The step differences have a height by which optical aberration due to the light path difference between the light passing through the inner area A1 and the annular lens area A2 can be removed with respect to the light of a relatively long wavelength emitted from the light source or the light for reproduction of the thick optical disk. Particularly, the height of the step difference is determined so that a light path difference between the light transmitted through the annular lens area A2 and the light transmitted through the inner area A1 of the objective lens 20 becomes an integer multiple of the wavelength of the used light as shown in Figure 3B. The step difference height is determined to be a value by which the optical aberration due to the light path difference can be removed by taking the offset $Z_{offset}$ in the equation (6) and the width of the annular lens area A2 into consideration. Preferably, the step difference height is approximately $1\mu m \sim -1.5\mu m$ according to the refractive index of the objective lens.

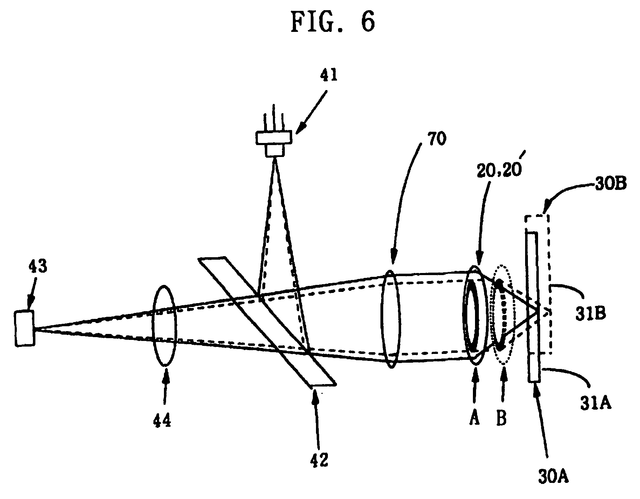

Figure 6 shows a first type of optical pickup having a single light source adopting an objective lens 20 or 20' according to the first and second embodiments of the present invention. The optical pickup shown in Figure 6 has a typical optical system, which is compatible with optical disks of various different formats using the identical wavelength of light, by using the objective lens 20 or 20' according to the first and second embodiments of the present invention. The optical source 41 emits the laser beam of a particular wavelength. A light detector 43 is designed so that the light transmitted through the outer area A3 of the objective lens 20 or 20' is not detected during reproduction of the thick optical disk 30B. That is, the light detector 43 is designed so that only the light transmitted through the inner area A1 and the annular lens area A2 of the objective lens 20 or 20' is detected during reproduction of information from the thick optical disk 30B.

For clarity, a case where the optical pickup of Figure 6 includes the objective lens 20 or 20' and the optical source 41 emits the light of 650nm wavelength will be described. The (light) rays of 650nm wavelength emitted from the light source 41 are reflected from a beam splitter 42. The beam splitter 42 reflects about 50% of the incident light and the reflected rays become substantially parallel by a collimating lens 70. Since the (light) rays incident from the light source toward the objective lens 20 or 20' can be made into substantially parallel light using the collimating lens 70, a more stable read operation can be performed. When a reproduction operation with respect to a thin disk 30A, for example, a DVD is performed, the (light) rays transmitted through the collimating lens 70 are focused in the form of a beam spot on an information recording surface 31A of the thin disk 30A by the objective lens 20 or 20'. In this case, the objective lens 20 or 20' has a working distance "WD1" and is shown as a solid line in Figure 6 at position A. Therefore, the rays of 650nm wavelength form a light path shown as the solid line in Figure 6. The light reflected from the information recording surface 31 A of the thin disk 30A is transmitted through the objective lens 20 or 20' and the collimating lens 70, and then is incident on the beam splitter 42. The beam splitter 42 transmits about 50% of the incident light and the transmitted light is focused into the light detector 43 by a light detection lens 44. Here, the light transmitted through the inner area A1 and the outer area A3 of the objective lens 20 or 20' forms a spot of a particular size on the information recording surface 31A of the thin disk 30A, by which information can be read from the information recording surface 31A of the thin disk 30A. Meanwhile, the light transmitted through the annular lens area A2 of the objective lens 20 or 20' forms a band in a scattered form at a position deviated by about $5\mu m$ on the disk 31B from the position of the spot formed by the light transmitted through the inner area A1 and the outer area A3. Thus, the light transmitted through the annular lens area A2 is not detected by the light detector 43 and does not function as noise with respect to an effective reproduction signal during reproduction of data from the thin disk 30A.

When a reproduction operation with respect to a thick disk 30b, for example, a CD or LD, is performed, the light transmitted through the collimating lens 70 is focused in the form of a beam spot on an information recording surface 31B of the thick disk 30B by the objective lens 20 or 20' at position B. In this case, the objective lens 20 or 20' has a working distance "WD2" and is shown as a. dotted line in Figure 6. Therefore, the light forms an optical path shown as the dotted line in Figure 6. Here, the light transmitted through the inner area A1 and the annular lens area A2 of the objective lens 20 or 20' forms a spot of a size on the information recording surface 31B of the thick disk 30B, by which information can be read from the information recording surface 31B of the thick disk 30B. Meanwhile, the light transmitted through the outer area A3 of the objective lens 20 or 20' forms a spot having a relatively weak intensity and lying at a position deviated from the position of the spot formed by the light transmitted through the inner area A1 and the annular lens area A2. Thus, the light detector 43 can read information from the thick disk 30B using the light transmitted through the inner area A1 and the annular lens area A2 of the objective lens 20 or 20'.

In more detail, the light transmitted through the inner area A1 generates spherical aberration on the information recording surface 31B of the thick disk 30B. However, the spherical aberration has a sufficiently small amount to read the signal from the thick disk 30B and the minimized optical aberration is maintained by defocusing the light by the amount of the spherical aberration at the optical axis. The lens curvature and an aspherical surface coefficient of the annular lens area A2 are corrected for a non-aberration optical system at the state where the working distance is adjusted to about 10μm, so that additional spherical aberration is not generated. Accordingly, the numerical aperture increases without increasing the optical aberration and the size of the spot is reduced. Thus, an existing optical disk such as an LD requiring a higher-density than a CD can be reproduced. For reference, a spot size of about 1.2pm is needed to reproduce the LD, and that of about 1.4μm is needed to reproduce the CD. A spot size of about 0.9μm is needed to reproduce the DVD. As a result, the present invention can reproduce the various disks such as DVD, LD and CD, using a simple optical pickup.

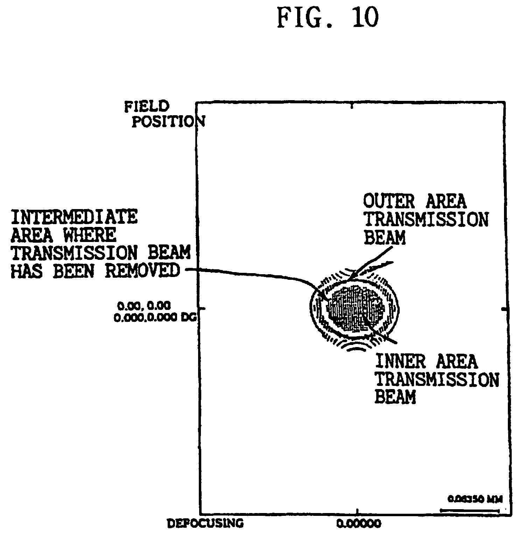

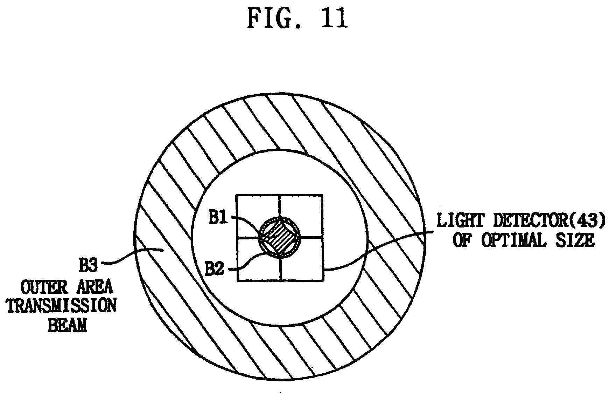

Figure 10 shows a distribution of the light in the light detector 43 when information from a thin disk 30A is reproduced according to first and second embodiments of the present invention. In Figure 10, dark portions are due to the light transmitted through the inner area A1 and the outer area A3 of the objective lens 20 or 20' and are detected as an efficient reproduction signal. However, bright portions between the dark portions represent that the light transmitted through the annular lens area A2 of the objective lens 20 or 20' is not detected in the light detector 43 and is not detected as an efficient reproduction signal. Figure 11 shows distribution of the light beams in the light detector 43 when information from a thick optical disk 30B is reproduced using the objective lens 20 or 20' according to the present invention. A notation "B1" shows a distribution of the light transmitted through the inner area A1 in the light detector, "B2" shows a distribution of the light transmitted through the annular lens area A2, and "B3" shows a distribution of the light transmitted through the outer area A3. The light forming the B1 and B2 distributions as shown in Figure 11 is detected as an efficient signal in the light detector 43, and the light forming the B3 distribution is not detected as an efficient reproduction signal.

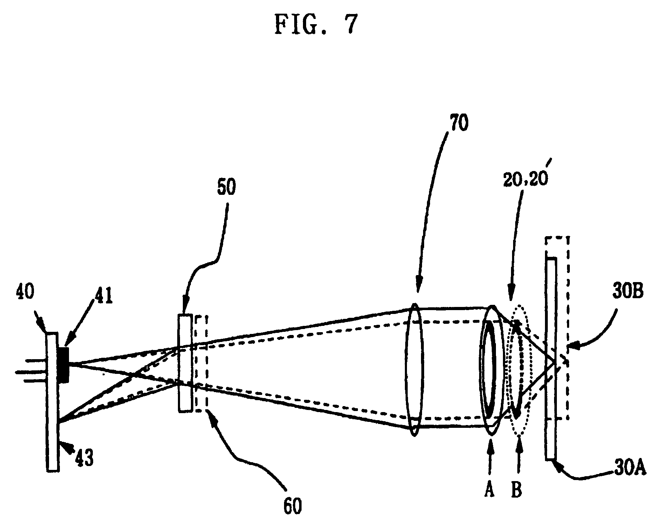

Figure 7 shows a modification of the optical system of the optical pickup shown in Figure 6. In Figure 7, a unit 40 includes a light source 41 and a light detector 43 which are formed in a single module. A holographic beam splitter 50 is a polarizing hologram with a high optical efficiency, and obtains a high optical efficiency by using a quarter wave plate 60. It is preferable that a polarizing hologram should be replaced by a general hologram in the case when the quarter wave plate 60 is not used. The (light) rays of 650nm from the light source 41 are transmitted through the holographic beam splitter 50 and the quarter wave plate 60, and then become parallel rays by the collimating lens 70. The objective lens 20 or 20' focuses the light incident from the collimating lens 70 on the information recording surface 31A of the thin optical disk 30A or the information recording surface 31B of the thick optical disk 30B, in the form of an optical spot. In the optical pickup shown in the Figure 7, since the objective lens 20 or 20' is the same as that in Figure 6, a detailed description thereof will be omitted. The light reflected from the information recording surface 31A or 31B is finally converged to be focused on the light detector 43 by the hologram beam splitter 50.

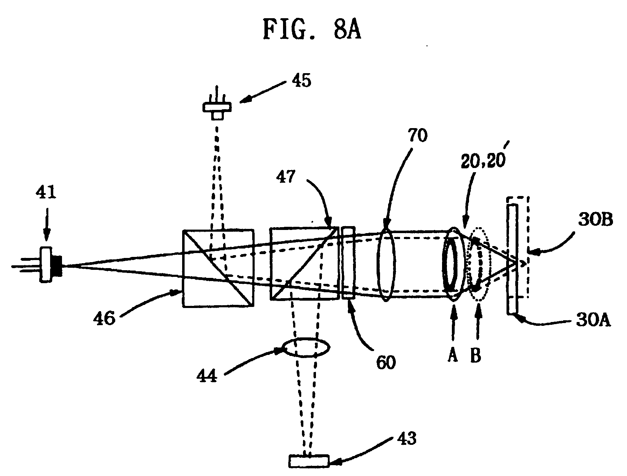

Figure 8A shows an optical pickup having an objective lens 20 or 20', two light sources 41 and 45 and a single light detector 43 according to the first and second embodiments of the present invention. The light source 41 emits a laser beam of 650nm and the light source 45 emits a laser beam of 780nm. The 780nm light source should be used for a CD, CD-RW, LD or a CD-R disk, and the 650nm light source should be used for a DVD, CD or CD-RW disk. When the light source 41 is used, the emitted light rays form an optical path shown as a solid line in Figure 8A, in which case the objective lens 20 or 20' is shown as a solid line at position A. When the light source 45 is used, the emitted light rays form an optical path shown as a dotted line, in which case the objective lens 20 or 20' is shown as a dotted line at position B. The optical spot focused on the thick optical disk 30B or the thin optical disk 30A by the objective lens 20 or 20' is the same as that shown in Figure 6.

A beam splitter 46 is a colour separable splitter, which transmits the light supplied from the light source 41 and reflects the light supplied from the light source 45. The light reflected from the beam splitter 46 is incident on a polarizing beam splitter 47. The polarizing beam splitter 47 has an optical characteristic which transmits or reflects linearly polarized beams, which operates with respect to the light of 650nm and 780nm wavelengths. The polarizing beam splitter 47 transmits the light incident from the beam splitter 46, and the transmitted light becomes a circularly polarized beam by a quarter wave plate 60. The circularly polarized beam is focused on the information recording surface of the thin optical disk 30A or the thick optical disk 30B of the objective lens 20 or 20'. The light reflected from the information recording surface passes through the objective lens 20 or 20' and the collimating lens 70 and then becomes linearly polarized light by the quarter wave plate 60. The linearly polarized light is reflected from the polarizing beam splitter 47 and the reflected light is focused into the light detector 43 by the light detection lens 44. The polarizing beam splitter 47 is replaced by a beam splitter which partially transmits and reflects the incident light when the quarter wave plate 60 is not used.

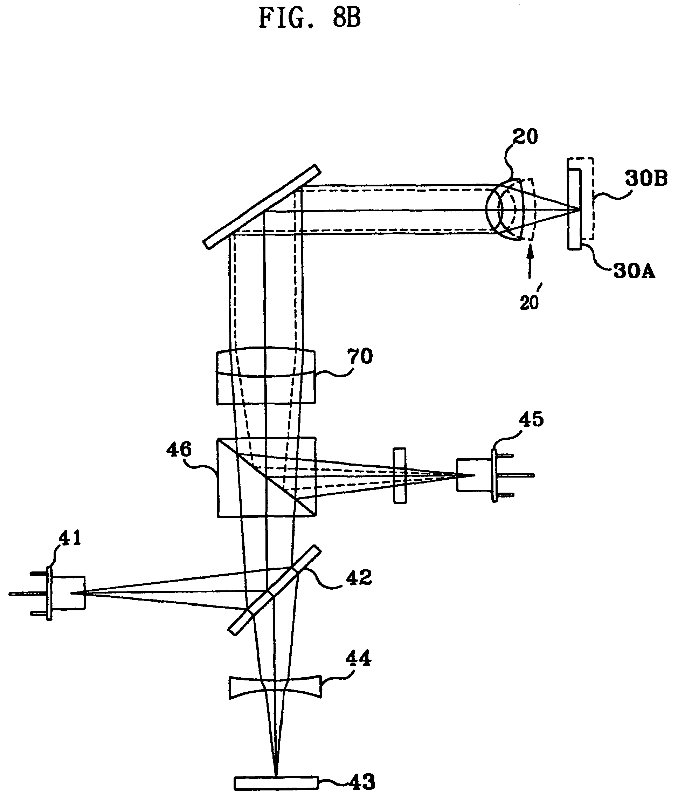

An optical pickup having an objective lens, two light sources, a single light detector, and a plate-type beam splitter 42, can be used as shown in Figure 8B. Figure 8B shows a modification of the optical pickup shown in Figure 8A, by replacing a cube-type beam splitter with a plate-type beam splitter. In addition, the two light sources 41 and 45 face in opposite directions relative to one another and the light detector faces at a 90° angle to the light sources 41 and 45. This is in contrast to the optical pickup shown in Figure 8A, wherein the light sources 41 and 45 face at right angles relative to each other and that the light detector 43 faces in an opposite direction to that of the light source 45 and at a right angle to the light source 41.

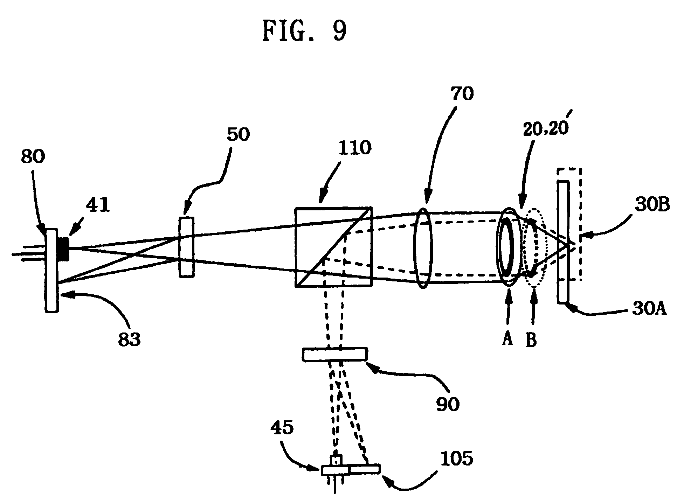

Figure 9 shows an optical pickup having an objective lens 20 or 20', two light sources 41 and 45 and two light detectors 83 and 105 according to the first and second embodiments of the present invention. In Figure 9, the light source 41 emits (light) rays having a wavelength of 650nm, the light detector 83 corresponds to the light source 41, and the light source 41 and the light detector 83. Reference numerals 45 and 105 are a light source and a light detector, respectively, for 780nm wavelength light, and 110 is a beam splitter. Other optical elements are the same as those shown in Figures 8A and 8B. Since the optical pickup system shown in the Figure 9 can be understood by a person skilled in the art based on the description provided regarding Figures 8A and 8B, a detailed description thereof will be omitted.

Up to now, the objective lens according to the present invention has been described with reference to the optical pickup. However, it is apparent to one having an ordinary skill in the art that the objective lens according to the present invention can be applied to a microscope or an optical pickup estimating apparatus.

As described above, the optical pickup according to the present invention is compatible with the disks having various different formats irrespective of the thickness or recording density of the disk, and an excellent reading signal can be obtained from the used disk. Also, the objective lens according to the present invention can be manufactured at low costs by using an injection molding. Particularly, when two or more wavelengths are used for optical disk compatibility, an optical pickup can be made using a single objective lens and a single light detector.

While only certain embodiments of the invention have been specifically described herein, it will be apparent that numerous modifications may be made thereto within the scope of the claims appended hereto.

**Claims**

1. An optical pickup device compatible with at least first and second different types of optical memory media (30A, 30B) having respective different first and second thicknesses, the optical pickup device comprising:

   a first light source (41);

   an objective lens (20, 20') compatible with the first (30A) and second (30B) different types of optical memory media having respective first and second different thicknesses and information recording surfaces (31A, 31B) which store information, the objective lens (20) being arranged to transmit light emitted from the first light source onto the optical memory medium, the objective lens having a plurality of lens portions having different optical characteristics;

   a photodetector to detect light reflected from said optical memory medium; and

   beam splitting means to receive said light emitted from said light source for transmission to said objective lens and for receiving said light reflected from said one optical memory medium for transmission to said photodetector;

   **characterised in that**:

   a first one (A1) of said plurality of lens portions of the objective lens (20,20') is arranged to focus said light onto said optical memory medium regardless of whether said optical memory medium is said first or second medium (30A,30B); and

   a second one (A2,A3) of said plurality of lens portions of the objective lens (20,20') is arranged to focus said light emitted from said light source onto only one of said first or second types of optical memory media (30A, 30B); and

   a surface of the objective lens (20/20') forms a step difference between one of the lens portions (A1/A2) and another one of the lens portions (A2/A3), where the step difference is an integer multiple of the wavelength of the light emitted from the light source (41).

2. The optical pick-up of claim 1, wherein said plurality of lens portions comprise:

an inner area (A1), an annular lens area (A2) and an outer area (A3) centered at a vertex (V1), the annular lens area (A2) having a ring shape and dividing the inner area (A1) from the outer area (A3), wherein the inner area (A1), the annular lens area (A2) and the outer area (A3) have aspherical shapes.

3. The optical pick-up of claim 2, wherein:

said first one of said plurality of lens portions comprises the inner area.(A1); and

said second portion comprises the outer area (A3) in the case of reading information from the first medium (30A); and

said second portion comprises the annular lens area (A2) in the case of reading information from the second medium (30B).

4. The optical pick-up of claim 3, wherein:

in the case of reading the first medium (30A), light transmitted through the inner area (A1) and the outer area (A3) is focused into a single light spot by which information is read from the information recording surface (31A) of the first medium (30A) and light transmitted through the annular lens area (A2) is scattered so as not to be focused on the information recording surface (31A) of the first medium (30A); and

in the case of reading the second medium (30B), the light transmitted through the inner area (A1) and the annular lens area (A2) is.focused into a single light spot by which the information is read from the information recording surface (31B) of the second medium (30B), light transmitted through the outer lens area (A3) is scattered so as not to be focused on the information recording surface (31B) of the second medium (30B) and wherein the second medium is thicker than the first medium (30A).

5. The optical pick-up of claim 2, 3 or 4, wherein the objective lens has a difference $\Delta Z$ between a focal distance of the annular lens area (A2) and that of the inner area (A1) is the same as a defocusing amount determined by the following relationship:

$$\Delta Z = -(2W_{40})/(NA)^2$$

wherein NA is a numerical aperture in the inner area (A1) and $W_{40}$ is a spherical aberration coefficient when the second medium (30B) is used.

6. The optical pickup device according to any of claims 1 to 5, wherein the objective lens (20, 20') has a working distance in such a manner that the light transmitted through the inner area is focused into a single light spot having minimum optical aberration on the information recording surface (31B) of the second medium (30B) during reading of the second medium (30B).

7. The optical pickup according to claim 6, wherein the aspherical surface shape of the inner area (A1) is such that the light transmitted through the inner area is focused into a single light spot on the information recording surface (31A) of the first optical medium (30A), and the same light is focused into an optical spot having minimum optical aberration on the information recording surface (31B) of the second optical medium (30B) during reproduction of the second optical medium (30B) with said working distance.

8. The optical pickup according to claim 7, wherein the aspherical shape of the annular lens area (A2) is such that the light transmitted through the annular lens area (A2) is focused into a single light spot having no spherical aberration on the information recording surface (31B) of the second optical recording medium (30B) during reproduction of the second optical recording medium (30B) having a thick substrate.

9. The optical pickup according to any of claims 1 to 8, further comprising:

a second light source (45), wherein the second light source emits light to be used with a thicker one of the optical memory media; and

wherein the objective lens (20, 20') has the step difference being an integer multiple of the wavelength of the light of the second light source (45).

10. The optical pickup according to claim 9, further comprising a beam splitter (46) having a beam splitting characteristic with respect to each of the plurality of the beams respectively emitted from the first light source (41) and the at least second light source (45).

11. The optical pickup as claimed in any of claims 2 to 10, wherein the inner area (A1) of the objective lens (20, 20') has a numerical aperture value NA which satisfies the following equation:

$$0.8\lambda/NA \sim \text{spot size}$$

where $\lambda$ represents the wavelength of light emitted from the light source and the spot size is a size of a spot that the light passing through the objective lens (20, 20') forms on a disk.

12. The optical pickup as claimed in claim 11, wherein the objective lens (20, 20') has a defocused coefficient $W_{20}$ which minimises an optical aberration according to the following equation:

$$W_{20}=-W_{40},$$

wherein $W_{40}$ is a spherical aberration coefficient produced due to a difference in the first and second thicknesses.

13. The optical pickup as claimed in claim 12, wherein a defocus amount $\Delta Z$ of the objective lens (20, 20') follows the following equation:

$$\Delta Z=-(2W_{40}) / (NA)^2,$$

wherein NA is a numerical aperture value of the inner area (A1).

14. The optical pickup as claimed in any of claims 1 to 13, further comprising: a separation unit (47) to separate incident light transmitted from said light source (41, 45) from light reflected by the disk (30A, 30B).

15. The optical pickup as claimed in claim 14, further comprising:

a collimating lens (70) disposed in a linear path between the objective lens (20, 20') and the light detector (43) to collimate the incident light separated by the separation unit (47) and to transmit the reflected light from the disk (30A, 30B) towards the separation unit (47); and

a light detection lens (44) to focus the reflected light passing through the separation unit (47) toward the detector (43).

16. An objective lens (20, 20') useable in the optical pickup of any preceding claim, wherein the objective lens comprises:

a plurality of lens portions (A1,A2,A3) having different optical characteristics;

**characterised in that**:

a first one (A1) of said plurality of lens portions is arranged to focus said light onto said optical memory medium regardless of whether said optical memory medium is said first or second medium (30A,30B); and

a second one (A2,A3) of said plurality of lens portions is arranged to focus said light emitted from said light source onto only one of said first or second types of optical memory media (30A, 30B); and

a surface of the objective lens (20, 20') forms a step difference between one of the lens portions (A1/A2) and another one of the lens portions (A2/A3), where the step difference is an integer multiple of the wavelength of the light emitted from the light source (41; 45).


**Patentansprüche**

1. Optische Abnehmervorrichtung, die mit wenigstens einem ersten und einem zweiten Typ optischer Speichermedien (30A, 30B) kompatibel ist, die sich voneinander unterscheiden, und eine erste bzw. zweite Dicke haben, die sich voneinander unterscheiden, wobei die optische Abnehmervorrichtung umfasst:

   eine erste Lichtquelle (41);

   eine Objektivlinse (20, 20'), die mit dem ersten (30A) und dem zweiten (30B) Typ optischer Speichermedien, die sich voneinander unterscheiden und eine erste bzw. eine zweite Dicke, die sich voneinander unterscheiden, sowie Informationsaufzeichnungsflächen (31A. 31B) haben, die Informationen speichern, kompatibel ist, wobei die Objektivlinse (20) so eingerichtet ist, dass sie von der ersten Lichtquelle emittiertes Licht auf das optische Speichermedium leitet, und die Objektivlinse eine Vielzahl von Linsenabschnitten mit unterschiedlichen optischen Eigenschaften hat;

   einen Fotodetektor, der von dem optischen Speichermedium reflektiertes Licht erfasst; und

   eine Strahlenteilereinrichtung, die das von der Lichtquelle emittierte Licht zum Leiten zu der Objektivlinse empfängt und das von dem einen optischen Speichermedium reflektierte Licht zum Leiten zu dem Fotodetektor empfängt;

   **dadurch gekennzeichnet, dass:**

   ein erster (A1) der Vielzahl von Linsenabschnitten der Objektivlinse (20, 20') so eingerichtet ist, dass er das Licht unabhängig davon, ob das optische Speichermedium das erste oder das zweite Medium (30A, 30B) ist, das Licht auf das optische Speichermedium fokussiert; und

   ein zweiter (A2/A3) der Vielzahl von Linsenabschnitten der Objektivlinse (20, 20') so eingerichtet ist, dass er das von der Lichtquelle emittierte Licht nur auf den ersten oder den zweiten Typ optischer Speichermedien (30A, 30B) fokussiert; und

   eine Oberfläche der Objektivlinse (20, 20') einen Stufenunterschied zwischen einem der Linsenabschnitte (A1, A2) und einem anderen der Linsenabschnitte (A2, A3) aufweist und der Stufenunterschied ein ganzes Vielfaches der Wellenlänge des von der Lichtquelle (41) emittierten Lichtes ist.

2. Optischer Abnehmer nach Anspruch 1, wobei die Vielzahl von Linsen abschnitten umfasst:

   einen inneren Bereich (A1), einen ringförmigen Linsenbereich (A2) und einen äußeren Bereich (A3), der an einem Scheitelpunkt (V1) zentriert ist, wobei der ringförmige Linsenbereich (A2) eine Ringform hat und den inneren Bereich (A1) von dem äußeren Bereich (A3) trennt, und wobei der innere Bereich (A1), der ringförmige Linsenbereich (A2) und der äußere Bereich (A3) asphärische Form haben.

3. Optischer Abnehmer nach Anspruch 2, wobei:

   der erste der Vielzahl von Linsenabschnitten den inneren Bereich (A1) umfasst; und

   der zweite Abschnitt beim Lesen von Informationen von dem ersten Medium (30A) den äußeren Bereich (A3) umfasst; und

   der zweite Bereich beim Lesen von Informationen von dem zweiten Medium (30B) den ringförmigen Linsenbereich (A2) umfasst.

4. Optischer Abnehmer nach Anspruch 3, wobei:

beim Lesen des ersten Mediums (30A) Licht, das durch den inneren Bereich (A1) und den äußeren Bereich (A3) geleitet wird, zu einem einzelnen Lichtpunkt fokussiert wird, mit dem Informationen von der Informationsaufzeichnungsfläche (31A) des ersten Mediums (30A) gelesen werden, und Licht, das durch den ringförmigen Linsenbereich (A2) geleitet wird, gestreut wird, so dass es nicht auf die Informationsaufzeichnungsfläche (31A) des ersten Mediums (30A) fokussiert wird; und

beim Lesen des zweiten Mediums (30B) das Licht, das durch den inneren Bereich (A1) und den ringförmigen Linseribereich (A2) geleitet wird, zu einem einzelnen Lichtpunkt fokussiert wird, mit dem die Informationen von der Informationsaufzeichnungsfläche (31 B) des zweiten Mediums (30B) gelesen werden, und Licht, das durch den äußeren Linsenbereich (A3) geleitet wird, gestreut wird, so dass es nicht auf die Informationsaufzeichnungsfläche (31 B) des zweiten Mediums (30B) fokussiert wird, und wobei das zweite Medium dicker ist als das erste Medium (30A).

5. Optischer Abnehmer nach Anspruch 2, 3 oder 4, wobei die Objektivlinse eine Differenz $\Delta Z$ zwischen einer Brennweite des ringförmigen Linsenbereiches (A2) und der des inneren Bereiches (A1) hat, die einem Betrag der Defokussierung entspricht, der durch die folgende Beziehung bestimmt wird:

$$\Delta Z = -(2W_{40})/(NA)^2$$

wobei NA eine numerische Apertur im inneren Bereich (A1) ist und $W_{40}$ ein Koeffizient der sphärischen Aberration beim Einsatz des zweiten Mediums (30B) ist.

6. Optische Abnehmervorrichtung nach einem der Ansprüche 1 bis 5, wobei die Objektivlinse (20, 20') eine Reichweite hat, durch die das durch den inneren Bereich geleitete Licht zu einem einzelnen Lichtpunkt fokussiert wird, der beim Lesen des zweiten Mediums (30B) minimale optische Aberration auf der Informationsaufzeichnungsfläche (31 B) des zweiten Mediums (30B) hat.

7. Optischer Abnehmer nach Anspruch 6, wobei die asphärische Oberflächenform des inneren Bereiches (A1) so ist, dass das durch den inneren Bereich hindurchgelassene Licht zu einem einzelnen Lichtpunkt auf der Informationsaufzeichnungsfläche (31A) des ersten optischen Mediums (30A) fokussiert wird und das gleiche Licht zu einem Lichtpunkt fokussiert wird, der bei der Wiedergabe des zweiten optischen Mediums (30B) bei der Reichweite minimale optische Aberration auf der informationsaufzeichnungsfläche (31B) des zweiten optischen Mediums (30B) hat.

8. Optischer Abnehmer nach Anspruch 7, wobei die asphärische Form des ringförmigen Linsenbereiches (A2) so ist, dass das durch den ringförmigen Linsenbereich (A2) geleitete Licht zu einem einzelnen Lichtpunkt fokussiert wird, der bei der Wiedergabe des zweiten optischen Aufzeichnungsmediums (30B) mit einem dicken Substrat keine sphärische Aberration auf der Informationsaufzeichhungsfläche (31 B) des zweiten optischen Aufzeichnungsmediums (30B) hat.

9. Optischer Abnehmer nach einem der Ansprüche 1 bis 8, der des Weiteren umfasst:

eine zweite Lichtquelle (45), wobei die zweite Lichtquelle Licht emittiert, das bei einem dickeren der optischen Speichermedien zu verwenden ist; und

wobei die Objektivlinse (20, 20') den Stufenunterschied hat, der ein ganzes Vielfaches der Wellenlänge des Lichtes der zweiten Lichtquelle (45) ist.

10. Optischer Abnehmer nach Anspruch 9, der des Weiteren einen Strahlenteiler (46) mit einer Strahlenteilcharakteristik in Bezug auf jeden der Vielzahl von Strahlen umfasst, die von der ersten Lichtquelle (41) bzw. der wenigstens zweiten Lichtquelle (45) emittiert werden.

11. Optischer Abnehmer nach einem der Ansprüche 2 bis 10, wobei der innere Bereich (A1) der Objektivlinse (20,20') einen Wert der numerischen Apertur NA hat, der die folgende Gleichung erfüllt:

$$0,8\lambda/NA \sim \text{Punktgröße}$$

wobei $\lambda$ die Wellenlänge von Licht darstellt, das von der Lichtquelle emittiert wird, und die Punktgröße eine Größe eines Punktes ist, den das durch die Objektivlinse (20, 20') tretende Licht auf einer Platte bildet.

12. Optischer Abnehmer nach Anspruch 12, wobei die Objektivlinse (20, 20') einen Defokussierungskoeffizienten $W_{20}$ hat, durch den eine optische Aberration gemäß der folgenden Gleichung auf ein Minimum verringert wird:

$$W_{20} = -W_{40},$$

wobei $W_{40}$ ein Koeffizient der sphärischen Aberration ist, der aufgrund einer Differenz zwischen der ersten und der zweiten Dicke entsteht.

13. Optischer Abnehmer nach Anspruch 12, wobei ein Grad der Defokussierung $\Delta Z$ der Objektivlinse (20, 20') der folgenden Gleichung entspricht:

$$\Delta Z = -(2W_{40})/(NA)^2,$$

wobei NA ein Wert der numerischen Apertur des inneren Bereiches (A1) ist.

14. Optischer Abnehmer nach einem der Ansprüche bis 13, der des Weiteren umfasst:

eine Trenneinheit (47), die von der Lichtquelle (41, 45) geleitetes auftreffendes Licht von durch die Platte (30A, 30B) reflektiertem Licht trennt.

15. Optischer Abnehmer nach Anspruch 14, der des Weiteren umfasst:

eine Kollimationslinse (70), die auf einem linearen Weg zwischen der Objektivlinse (20, 20') und dem Lichtdetektor (43) angeordnet ist und das durch die Trenneinheit (47) getrennte auftreffende Licht kollimiert und das von der Platte (30A, 30B) reflektierte Licht zu der Trenneinheit (47) leitet; und

eine Lichterfässungslinse (44), die das durch die Trenneinheit (47) tretende Licht auf den Detektor (43) zu fokussiert.

16. Objektivlinse (20, 20'), die in dem optischen Abnehmer nach einem der vorangehenden Ansprüche eingesetzt werden kann, wobei die Objektivlinse umfasst:

eine Vielzahl von Linsenabschnitten (A1, A2, A3) mit unterschiedlichen optischen Eigenschaften;

**dadurch gekennzeichnet, dass:**

ein erster (A1) der Vielzahl von Linsenabschnitten so eingerichtet ist, dass er das Licht unabhängig davon, ob das optische Speichermedium das erste oder das zweite Medium (30A, 30B) ist, auf das optische Speichermedium fokussiert; und

ein zweiter (A2, A3) der Vielzahl von Linsenabschnitten so eingerichtet ist, dass er das von der Lichtquelle emittierte Licht nur auf den ersten oder den zweiten Typ optischer Speichermedien (30A, 30B) fokussiert; und

eine Oberfläche der Objektivlinse (20, 20') einen Stufenunterschied zwischen einem der Linsenabschnitte (A1, A2) und einem anderen der Linsenabschnitte (A2, A3) aufweist und der Stufenunterschied ein ganzes Vielfaches der Wellenlänge des von der Lichtquelle (41) emittierten Lichtes ist.

**Revendications**

1. Dispositif à tête optique compatible avec au moins des premier et second types différents de support de mémoire optique (30A, 30B) présentant respectivement des première et seconde épaisseurs différentes, le dispositif à tête optique comprenant :

   - une première source lumineuse (41) ;
   - une lentille d'objectif (20, 20') compatible avec les premier (30A) et second (30B) types différents de support de mémoire optique présentant respectivement des première et seconde épaisseurs différentes et des surfaces d'enregistrement d'informations (31A, 31B) qui mémorisent des informations, la lentille d'objectif (20) étant disposée de manière à transmettre au support de mémoire optique la lumière émise par la première source lumineuse, et ayant plusieurs parties de lentille avec des caractéristiques optiques différentes ;
   - un photodétecteur pour détecter la lumière réfléchie par le support de mémoire optique ; et
   - des moyens de fractionnement de faisceau pour recevoir la lumière émise par la source lumineuse en vue d'une transmission à la lentille d'objectif, et pour recevoir la lumière réfléchie par le support de mémoire optique en vue d'une transmission au photodétecteur ;

      **caractérisé en ce qu'**une première partie (A1) de la lentille d'objectif (20, 20') est conçue pour focaliser la lumière sur le support de mémoire optique, qu'il s'agisse du premier ou du second (30A, 30B) ;
      **en ce qu'**une deuxième partie (A2, A3) de la lentille d'objectif (20, 20') est conçue pour ne focaliser la lumière émise par la source lumineuse que sur le premier ou le second type de support de mémoire optique (30A, 30B) ;
      et **en ce qu'**une surface de la lentille d'objectif (20/20') forme un étagement entre une partie de lentille (A1/A2) et une autre partie de lentille (A2/A3), la valeur de l'étagement étant un multiple entier de la longueur d'onde de la lumière émise par la source lumineuse (41).

2. Tête optique selon la revendication 1, dans laquelle les parties de lentille comprennent :

   une zone intérieure (A1), une zone de lentille annulaire (A2) et une zone extérieure (A3) centrée sur un sommet (V1), la zone de lentille annulaire (A2) ayant la forme d'une bague et séparant la zone intérieure (A1) et la zone extérieure (A3), étant précisé que la zone intérieure (A1), la zone de lentille annulaire (A2) et la zone extérieure (A3) ont des formes asphériques.

3. Tête optique selon la revendication 2, dans laquelle la première partie de lentille comprend la zone intérieure (A1) ;
   la deuxième partie comprend la zone extérieure (A3) dans le cas où les informations sont lues sur le premier support (30A) ; et
   ladite deuxième partie comprend la zone de lentille annulaire (A2) dans le cas où les informations sont lues sur le second support (30B).

4. Tête optique selon la revendication 3, dans laquelle
   dans le cas d'une lecture à partir du premier support (30A), la lumière transmise par la zone intérieure (A1) et la zone extérieure (A3) est focalisée en un seul point lumineux, moyennant quoi les informations sont lues sur la surface d'enregistrement d'informations (31A) du premier support (30A), et la lumière transmise par la zone de lentille annulaire (A2) est dispersée de manière à ne pas être focalisée sur ladite surface d'enregistrement d'informations (31A) du premier support (30A) ; et
   dans le cas d'une lecture à partir du second support (30B), la lumière transmise par la zone intérieure (A1) et la zone de lentille annulaire (A2) est focalisée en un seul point lumineux, moyennant quoi les informations sont lues sur la surface d'enregistrement d'informations (31B) du second support (30B), et la lumière transmise par la zone de lentille extérieure (A3) est dispersée de manière à ne pas être focalisée sur la surface d'enregistrement d'informations (31B) du second support (30B), lequel second support est plus épais que le premier support (30A).

5. Tête optique selon la revendication 2, 3 ou 4, dans laquelle la lentille d'objectif a une différence $\Delta Z$ entre une distance focale de la zone de lentille annulaire (A2) et celle de la zone intérieure (A1) qui est la même qu'un degré de défocalisation détermine par la relation suivante :

$$\Delta Z = -\,(2W_{40}) / (NA)^2,$$

NA désignant une ouverture numérique dans la zone intérieure (A1), et $W_{40}$ un coefficient d'aberration sphérique quand c'est le second support (30B) qui est utilisé.

6. Dispositif à tête optique selon l'une quelconque des revendications 1 à 5, dans lequel la lentille d'objectif (20, 20') a une distance de travail qui est telle que la lumière transmise par la zone intérieure est focalisée en un seul point lumineux qui présente une aberration optique minimale sur la surface d'enregistrement d'informations (31B) du second support (30B) pendant la lecture de celui-ci.

7. Tête optique selon la revendication 6, dans laquelle la forme superficielle asphérique de la zone intérieure (A1) est telle que la lumière transmise par la zone intérieure est focalisée en un seul point lumineux sur la surface d'enregistrement d'informations (31A) du premier support optique (30A), et la même lumière est focalisée en un point optique qui présente une aberration optique minimale sur ladite surface d'enregistrement d'informations (31B) du second support optique (30B) pendant la reproduction de ce dernier avec ladite distance de travail.

8. Tête optique selon la revendication 7, dans laquelle la forme asphérique de la zone de lentille annulaire (A2) est telle que la lumière transmise par la zone de lentille annulaire (A2) est focalisée en un seul point lumineux qui ne présente pas d'aberration sphérique sur la surface d'enregistrement d'informations (31B) du second support d'enregistrement optique (30B) pendant la reproduction dudit second support (30B) qui a un substrat épais.

9. Tête optique selon l'une quelconque des revendications 1 à 8, comprenant également :

   une seconde source lumineuse (45), laquelle émet la lumière à utiliser avec un support de mémoire optique plus épais ; et
   la lentille d'objectif (20, 20') présentant un étagement dont la valeur est un multiple entier de la longueur d'onde de la lumière de la seconde source lumineuse (45).

10. Tête optique selon la revendication 9, comprenant également un séparateur de faisceau (46) qui présente une caractéristique de fractionnement de faisceau par rapport à chacun des faisceaux émis respectivement par la première source lumineuse (41) et par la ou les deuxièmes sources lumineuses (46).

11. Tête optique selon l'une quelconque des revendications 2 à 10, dans laquelle la surface intérieure (A1) de la lentille d'objectif (20, 20') a une valeur d'ouverture numérique NA qui répond à l'équation suivante :

$$0.8\lambda/NA^{-} \text{ taille du point,}$$

λ représentant la longueur d'onde de la lumière émise par la source lumineuse, et la taille du point désignant une taille d'un point que la lumière forme sur un disque en traversant la lentille d'objectif (20, 20').

12. Tête optique selon la revendication 11, dans laquelle la lentille d'objectif (20, 20') a un coefficient défocalisé $W_{20}$ qui minimalise une aberration optique selon l'équation suivante :

$$W_{20} = -W_{40},$$

dans laquelle $W_{40}$ désigne un coefficient d'aberration sphérique dû à une différence entre les première et seconde épaisseurs.

13. Tête optique selon la revendication 12, dans laquelle un degré de défocalisation ΔZ de la lentille d'objectif (20, 20') suit l'équation suivante :

$$\Delta Z = - (2W_{40}) / (NA)^{2},$$

dans laquelle NA désigne une valeur d'ouverture numérique de la zone intérieure (A1).

14. Tête optique selon l'une des revendications 1 à 13, comprenant également : une unité de séparation (47) pour séparer la lumière incidente transmise par la source lumineuse (41, 45) et la lumière réfléchie par le disque (30A, 30B).

**15.** Tête optique selon la revendication 14, comprenant également :

une lentille de collimation (70) qui est disposée sur une trajectoire linéaire entre la lentille d'objectif (20, 20') et le détecteur de lumière (43) pour collimater la lumière incidente séparée par l'unité de séparation (47), et transmettre la lumière réfléchie du disque (30A, 30B) vers l'unité de séparation (47) ; et
une lentille de détection de lumière (44) pour focaliser la lumière réfléchie qui traverse l'unité de séparation (47) vers le détecteur (43).

**16.** Lentille d'objectif (20, 20') apte à être utilisée dans la tête optique de l'une quelconque des revendications précédentes, comprenant plusieurs parties de lentilles (A1, A2, A3) qui ont des caractéristiques optiques différentes,
**caractérisée en ce qu'**une première partie de lentille (A1) est conçue pour focaliser la lumière sur le support de mémoire optique, qu'il s'agisse du premier ou du second support (30A, 30B) ;
**en ce qu'**une deuxième partie de lentille (A2, A3) est conçue pour ne focaliser la lumière émise par la source lumineuse que sur le premier ou le second type de support de mémoire optique (30A, 30B) ; et
**en ce qu'**une surface de la lentille d'objectif (20, 20') forme un étagement entre les parties de lentille (A1/A2) et une autre partie de lentille (A2/A3), la valeur de l'étagement étant un multiple entier de la longueur d'onde de la lumière émise par la source lumineuse (41 ; 45).

FIG. 1A

FIG. 1B

FIG. 2A

FIG. 2B

FIG. 2C

## FIG. 2D

## FIG. 3A

h | 1.458mm

A2

−0.729mm

A1

−10 −5 0 5 10 (μm)

LONGITUDINAL
SPHERICAL ABERRATION

## FIG. 3B

1λ

A2

A1

WAVEFRONT
ABERRATION (λ rms)

FIG. 4

HEIGHT OF
STEP DIFFERENCE

$Z_{OFFSET}$

FIG. 5

FIG. 6

EP 1 256 941 B1

EP 1 256 941 B1

# FIG. 7

# FIG. 8A

EP 1 256 941 B1

FIG. 8B

FIG. 9

EP 1 256 941 B1

# FIG. 10

FIELD
POSITION

INTERMEDIATE
AREA WHERE
TRANSMISSION BEAM
HAS BEEN REMOVED

OUTER AREA
TRANSMISSION
BEAM

INNER AREA
TRANSMISSION
BEAM

0.00, 0.00
0.000,0.000 DG

0.06350 MM

DEPOCUSING                    0.00000

29

FIG. 11

B3
OUTER AREA
TRANSMISSION
BEAM

B1

B2

LIGHT DETECTOR(43)
OF OPTIMAL SIZE